# EUROPEAN PATENT SPECIFICATION

(11) **EP 3 230 038 B1**
(45) Date of publication and mention of the grant of the patent: **20.04.2022**
(21) Application number: 15804732.4
(22) Date of filing: 01.12.2015
(51) Int. Cl.: B29C 48/08, B29C 48/20

(54) **METHOD FOR EXTRUDING AN EXPANDED POLYMER SHEET**
VERFAHREN ZUR EXTRUSION VON EXPANDIERTEN POLYMERFOLIEN
PROCÉDÉ POUR L'EXTRUSION D'UNE FEUILLE DE POLYMÈRE EXPANSÉ

(30) Priority: 09.12.2014 IT MI20142107
(43) Date of publication of application: 18.10.2017
(73) Proprietor: Proxital S.p.A., 31045 Motta Di Livenza (IT)
(72) Inventor: RONZINI, Emanuele, 31045 Motta Di Livenza (IT)
(74) Representative: Zamprogno, Bruno
(86) International application number: PCT/EP2015/078219
(87) International publication number: WO 2016/091660

(56) References cited:
- EP-A2- 2 089 211
- WO-A1-2007/003717
- GB-A- 2 045 674
- US-A- 3 274 315
- US-A- 3 372 920
- US-A1- 2010 000 753

## Description

The present invention relates to a method for extruding an expanded polymer sheet, such as a protective sheet for packaging or impact protection or vibration damping or used as a thermal and acoustic insulator.

The current and most widespread protective sheets for packaging currently are usually obtained by extruding a polymer, such as for example an expanded polyolefin made of polyethylene or polypropylene.

Such material has technological limitations as regards determining the weight of the product obtained by extrusion, such weight being high.

A drawback that can be ascribed to the background art is therefore that it allows to obtain a sheet that is excessively oversized for the needs for which its use is intended.

An expanded product obtained with the mentioned background art is in fact characterized not only by a given thickness and height but also by a density that is measured in kilograms per cubic meter, such densities possibly becoming as low as 10 kg/m³.

An expanded polymer is in fact characterized by microcells that are uniformly distributed in the cross-section; such a product, for an equal formulation (main polymer and corresponding additives) is characterized by mechanical requirements that depend exclusively on the number of cells per unit surface and on their size.

This leads to a limited range of intervention to adapt the product to the characteristics required for its use.

Prior art, constituted by US3372920A, US2010/000753A1, US3274315A, WO2007/003717A1, GB2045674A and EP2089211A2, is known.

In particular, US3372920A discloses channels 20 for air emission, with dimensions on the order of millimeters, arranged inside the ducts 60, with dimensions on the order of centimeters, used to extrude a thermoplastic material, necessarily not expanded or non-cellular, which is expelled at outlet orifices 13 arranged beyond the end of the channels 20.

As is known, the extrusion of a thermoplastic polymer entails inserting it, with any additives, by means of a hopper, into an extrusion cylinder, inside which the material is softened and mixed and, once it has reached temperatures and pressures that allow its shaping, is inserted in the extrusion head, where it assumes a shape which, with post-extrusion cooling, can undergo variations linked to the thermal expansions of the material following its cooling.

However, the process that determines the shape is established exclusively by the extrusion head; for this reason, the channels 20 lie entirely inside the extrusion duct 60, otherwise the final shape might be compromised.

Therefore, this solution does not appear suitable to obtain a sheet of expanded polymer, or cellular polymer, as the present solution seeks to do, such as a protective sheet for packaging or impact protection or vibration damping or used as a thermal and acoustic insulator, since the background art, due to the type of product that it seeks to provide, injects air when it is still present inside the duct 60.

Besides, in the background art the main embodiments, in view of the arrangement and dimensions of the exit ducts of the channels 20, create a tube that is inflated by air pressure, which generates a continuous stream of air lines extended along the direction of extrusion, imparting a wavy effect to the extruded film, this effect being implemented for the purposes proposed in the background art if it is arranged between two continuous external layers.

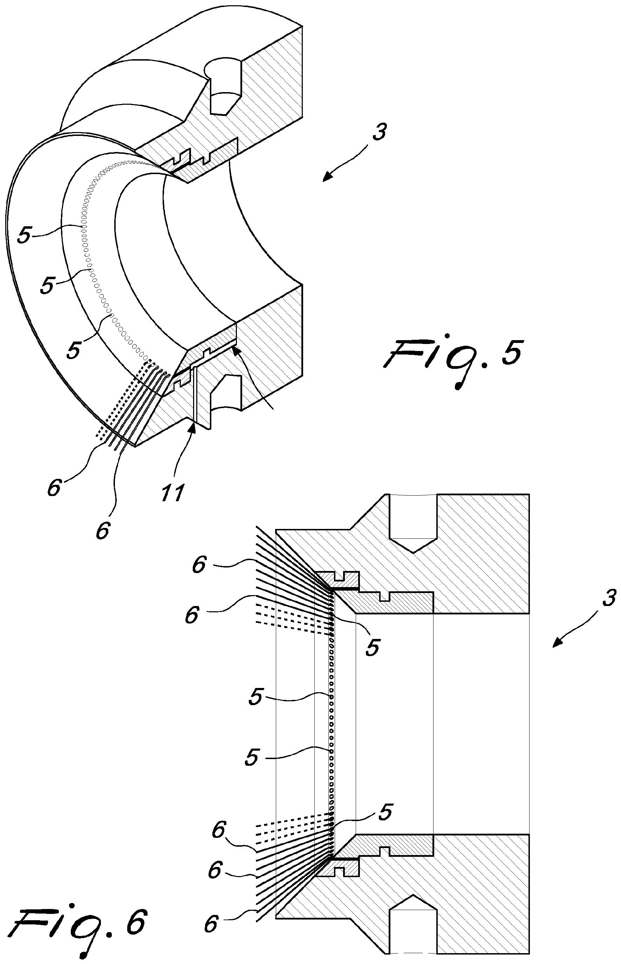

The solution shown in Figure 5, if cellular polymers are used, does not appear to be technically achievable, since the expansion process ends outside of the extrusion duct 60 with the evaporation of the expanding gas contained in the thermoplastic material, as a consequence of the pressure differential between the inside and the outside of the extruder, which would prevent the obtainment of distinct, uniform and equidistant channels.

The evaporation of the expanding gas and its outward migration determines a dimensional instability in the film, which therefore prevents the formation of distinct, uniform and equidistant channels.

In the remaining mentioned background art, also, there are channels for extrusion which end inside or at the end of the extrusion head.

In particular, prior art EP2089211A2, in addition to having a conduit 42 for feeding compressed air 44 arranged inside a die 14 that has an orifice 36 at its end, allows to obtain only a flat sheet.

The aim of the present invention is therefore to solve the described technical problems, by eliminating the drawbacks of the cited background art and thus devising a method that allows to provide a sheet made of expanded polymer sheet, or cellular polymer such as an expanded polyolefin typically made of polyethylene or polypropylene, such as a protective sheet for packaging or impact protection or vibration damping or thermal and acoustic insulation, that allows to reduce the quantity by weight of the material used for its provision, so as to achieve a saving in terms of use of raw materials.

Within this aim, an object of the method is to provide rapidly and simply and with low costs an expanded polymer sheet, such as a protective sheet for packaging or impact protection or vibration damping or thermal and acoustic insulation, that has uniform protective characteristics over its entire surface.

Another object is to devise a method that allows to have a protective sheet for packaging or impact protection or vibration damping or thermal and acoustic insulation that requires a low consumption of material and allows to achieve a lower environmental impact and a lower cost.

Another object is to devise a method that allows to have a protective sheet for packaging or impact protection or vibration damping or thermal and acoustic insulation that has a high strength suitable to avoid any perforations and/or breakages by compression.

This aim and these and other objects that will become better apparent hereinafter are achieved by a method for extruding an expanded polymer performed according to claim 1 and and preferably, but not necessarily, in any of the dependent claims.

Further characteristics and advantages of the invention will become better apparent from the detailed description of a particular but not exclusive embodiment thereof, illustrated by way of nonlimiting example in the accompanying drawings, wherein:

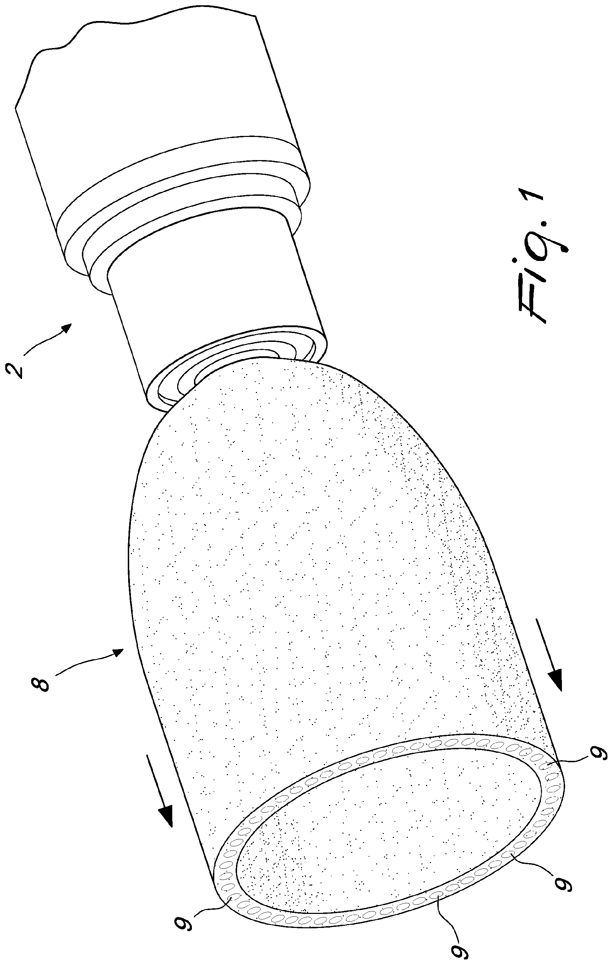

Figure 1 is a side view of the extrusion head and of the extruded tube;

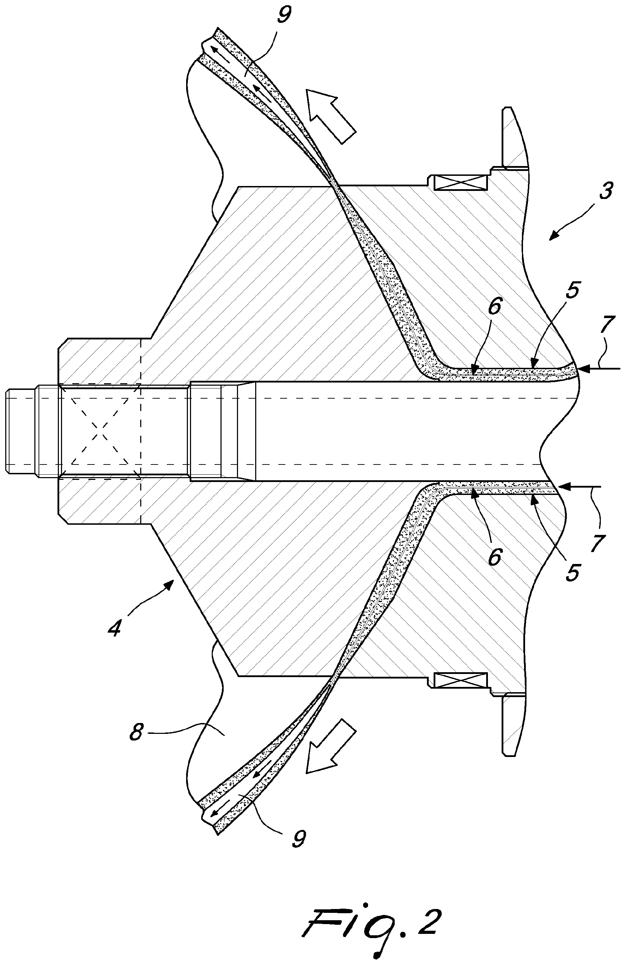

Figure 2 is a sectional view of the head;

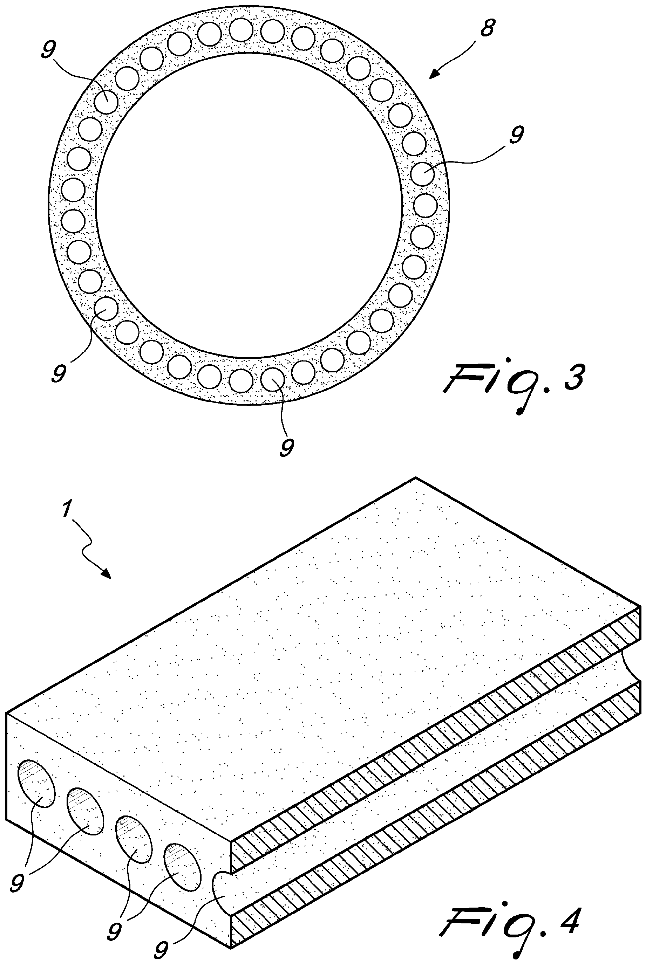

Figure 3 is a front view of the tube obtained;
Figure 4 is a view of the sheet obtained from the tube once it has been cut;
Figure 5 is a partially sectional perspective view of the female die;
Figure 6 is a sectional view of the female die of figure 5;
Figure 7 is a view of a first variation for the extrusion head;
Figure 8 is a view of a second variation for the extrusion head.

In the exemplary embodiments that follow, individual characteristics, given in relation to specific examples, may actually be interchanged with other different characteristics that exist in other exemplary embodiments.

With reference to the figures, the numeral 1 designates a protective sheet for packaging or impact protection or vibration damping or thermal and acoustic insulation.

The method provides for the use of an extrusion head 2 that is composed of a female die 3 and a male die 4, between which a duct is provided for the extrusion of a polymer, in particular an expanded polyolefin typically made of polyethylene or polypropylene, which allow to obtain a high flexibility, i.e., the ability to adapt to shapes, a low modulus of elasticity, i.e., the ability to deform on the basis of the applied loads, and a low dynamic rigidity, i.e., the ability to absorb impacts and vibrations.

At the female die 3 there is a plurality of holes 5 that accommodate a plurality of needles or cannulas 6 that are axially perforated and have a diameter substantially of a few tenths of a millimeter.

The needles or cannulas 6 may have a chosen polygonal cross-section.

The holes 5 are connected to the polymer extrusion duct.

The needles or cannulas 6, which can be arranged at said polymer extrusion duct, protrude therefrom and from the female die 3 by a chosen length.

The plurality of needles or cannulas 6 is affected by an expanding fluid 7 during the extrusion of the polymer.

The fluid 7 can be constituted by a gas or by a liquid; thus, for example, it can be constituted by a stream of air or carbon dioxide or by a liquid having desired chemical/physical characteristics, such as water.

The method allows further to obtain a tube 8 that exits continuously from the extrusion head 2; when the film of thermoplastic material exits from the head 2, the extrusion process ends with the vaporization of the gas contained inside the thermoplastic material and the film thus has good dimensional stability.

Then, in a region that however is located beyond the end of the holes 5 connected to the polymer extrusion duct, the fluid 7 is made to flow inside each needle or cannula 6: however, indeed because each needle or cannula 6 protrudes outside the end of the holes 5 for extrusion of the polymer and therefore of the head 2, the polymer is already stabilized and therefore can be separated from the fluid 7 so as to define an axial cavity or seat 9 that is dimensionally stable.

A plurality of axial cavities 9 which are mutually distinct and uniform are thus obtained.

It would be impossible to give the film the shape to which the present invention relates if the needles or cannulas 6 ended inside or at the end of the holes 5 connected to the polymer extrusion duct, as shown in the background art.

The shape of each axial cavity or seat 9 can vary as a function of the shape of the needles or cannulas 6; thus, for example, it can be circular or square or rectangular or elliptical.

The tube 8 that is obtained thus has a plurality of axial cavities or seats 9 that are mutually spaced by the chosen distance as a function of the number and placement of the needles or cannulas 6.

The axial seats or cavities 9 can also be obtained so as to be mutually equidistant.

The tube 8, once cut longitudinally, defines the sheet 1, which is thus provided with separate axial cavities or seats 9 that have the chosen polygonal shape and the size of which depends on the extent of the fluid that is injected and/or on the extrusion rate and/or on the type of polymer used.

The film that exits from the extrusion head 2 can have heights comprised between 500 and 3000 mm with thicknesses between 2 and 50 mm and can be wound in rolls or cuts directly into panels; the different heights can be obtained by mounting female dies 3 and male dies 4 between which there are the cannulas 6 having different diameters.

The sheet 1 can be subsequently transformed by means of different processes, such as the coupling of a plurality of layers of extruded product (panels).

It has been found that the invention has achieved the intended aim and objects, a method having been devised which allows to provide rapidly and simply and with low costs a sheet made of expanded polymer, such as a protective sheet for packaging or impact protection or vibration damping or thermal and acoustic insulation, that has a very low weight per cubic meter due to the reduced use of material thanks to the presence of the axial cavities or seats 9.

The presence of the axial cavities or seats 9 in fact allows to reduce the amount of material used to manufacture a product having the same dimensional and volume characteristics, for an equal thickness, height and length of the item.

The amount of material used is estimated to be 40-70% lower with respect to the product obtained with the background art; it is noted that the reduction by even 1% constitutes a competitive advantage of the product both from the economic viewpoint and from the environmental viewpoint.

Furthermore, the resulting sheet has uniform protective characteristics over its entire surface, since the axial cavities or seats 9 are mutually identical and uniformly distributed along the entire sheet 1.

The method also allows to provide a protective sheet for packaging or impact protection or vibration damping or thermal and acoustic insulation that has a low manufacturing cost and consequently reduces the expense for example for packaging the products.

The axial cavities or seats 9, for equal characteristics of the expanded polymer, thus increase the flexibility of the resulting product, reduce the modulus of elasticity and dynamic rigidity, thus increasing the ability to absorb impacts and vibrations.

Obviously, the invention is susceptible of numerous modifications and variations, all of which are within the scope of the appended claims.

Obviously, the materials used, as well as the dimensions that constitute the individual components of the invention, may be more pertinent according to the specific requirements.

Thus, for example, the sheet 1 can have a thickness that can vary from 2 to 50 millimeters and the axial seats or cavities 9 may be mutually equidistant.

For example, the tube 8 can have a diameter comprised between 300 millimeters and 3000 millimeters (film height).

Figures 5 and 6 show a female die 3 which illustrates the presence of a chamber 10 within which air is injected through one or more first channels 11; the chamber 10 is connected to the holes or channels 5.

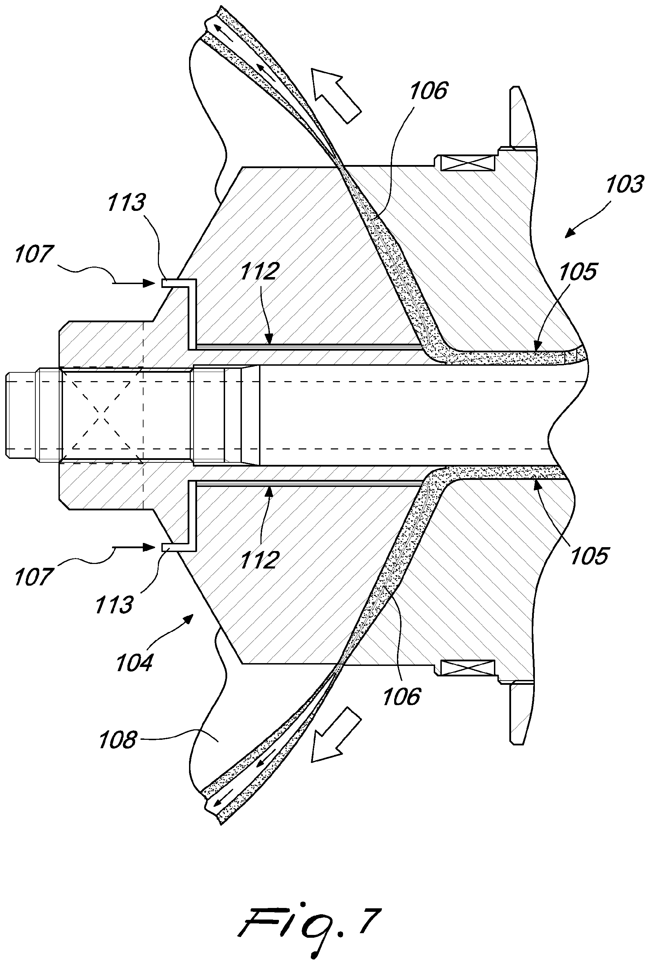

Figure 7 shows a first variation, in which a plurality of second channels 112 are provided on the male die 104 and are connected to one or more third channels 113 that protrude externally with respect to the male die 104 and within which the fluid 107 flows.

Within each one of the second channels 112 there is a needle or cannula 106, which protrudes from each second channel 112 until it affects the hole 105 for feeding the polymer; each needle or cannula 106 is then curved so as to affect the duct for the extrusion of the plastic material that is defined between the male die 104 and the female die 103 until it protrudes therefrom by a chosen length.

This solution, also, achieves the intended aim and objects.

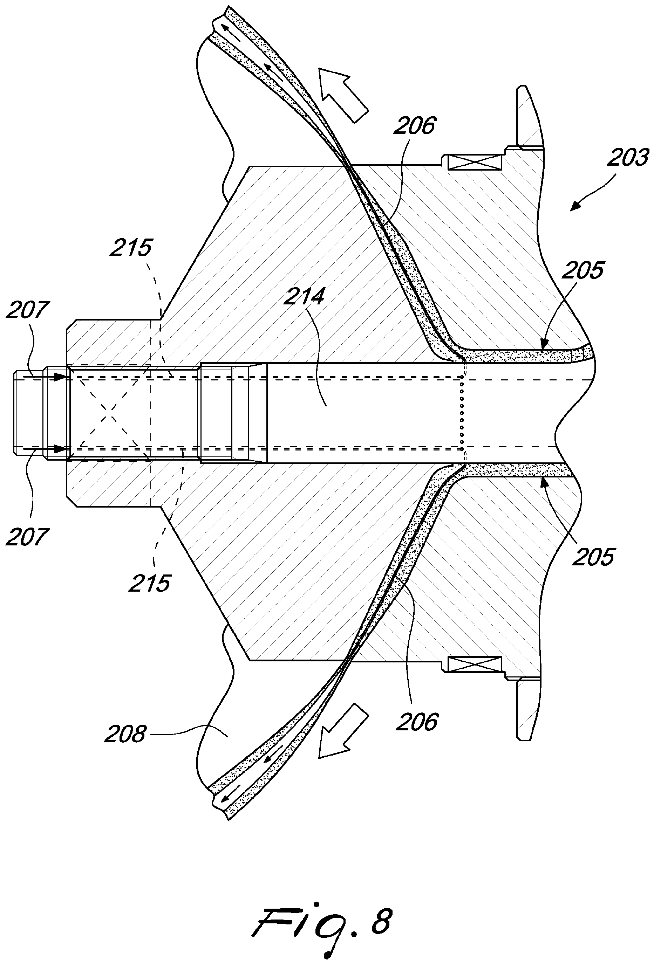

Figure 8 shows a second variation, in which on the male die 204 there are, at the die supporting shaft 214, fourth channels 215 that protrude externally and frontally with respect to the die supporting shaft 214 and within which the fluid 207 flows.

Within each one of the fourth channels 215 there is a needle or cannula 206, which protrudes from each fourth channel 215 until it affects the hole 205 for feeding the polymer; each needle or cannula 206 is then curved so as to affect the duct for the extrusion of a polymer defined between the male die 204 and the female die 203 until it protrudes therefrom by a chosen length.

This solution, also, achieves the intended aim and objects.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for extruding a sheet (1) of expanded polymer, such as an expanded polyolefin made of polyethylene or polypropylene, by means of an extrusion head (2) composed of a female die (3, 103, 203) and a male die (4, 104, 204) that define a duct for the extrusion of said polymer, wherein
said male or female dies (3, 103, 203, 4, 104, 204) have a plurality of holes (5, 105, 205) that accommodate a plurality of needles or cannulas (6, 106, 206) that are axially perforated and can be arranged at said duct for the extrusion of said polymer and exit therefrom,
the method being **characterized in**:
said plurality of needles or cannulas (6, 106, 206) protruding outside the end of said the holes (5, 105, 205) and of said extrusion head (2);
performing an extrusion step, wherein said extrusion head (2) extrudes a polymer in order to provide a tube (8);
during said extrusion, affecting said plurality of needles or cannulas (6, 106, 206) by a fluid (7, 107, 207) that expands during the extrusion of said polymer, in order to separate said polymer in output from said head (2) so as to define said axial cavities or seats (9) in said extruded tube (8);
cutting longitudinally said extruded tube (8) to define said sheet (1) provided with said distinct axial cavities or seats (9).

2. The method according to claim 1, **characterized in that** a plurality of holes (5) are provided at said female die (3) and accommodate a plurality of needles or cannulas (6), which are perforated axially and have a diameter substantially of a few tenths of a millimeter, said holes (5) being connected to said duct for the extrusion of said polymer, said needles or cannulas (6) exiting from said duct for the extrusion of said polymer and from said female die (3) for a chosen length.

3. The method according to claim 1 , **characterized in that** it allows to obtain a tube (8) that has, at its thickness, a plurality of axial cavities or seats (9) that are mutually spaced as a function of the number and placement of said needles or cannulas (6), said tube (8) being subsequently cut longitudinally so as to define said sheet (1) provided with distinct axial cavities or seats (9) that have a polygonal shape.

4. The method according to one or more of the preceding claims, **characterized in that** said female die (3) has a chamber (10) in which a fluid is introduced through one or more first channels (11), said chamber (10) being connected to said holes (5).

5. The method according to one or more of the preceding claims, **characterized in that** a plurality of second channels (112) are provided on said male die (104) and are connected to one or more third channels (113) that protrude outside said male die (104) and in which a fluid (107) is introduced, a needle or cannula (106) being present within each one of said second channels (112) and protruding from each one of said second channels (112) until it affects a hole (105) for feeding said polymer, each one of said needles or cannulas (106) being then curved so as to affect said duct for the extrusion of said polymer defined between said male die (104) and said female die (103) until it exits from the latter by a chosen length.

6. The method according to one or more of the preceding claims, **characterized in that** in said male die (204) there are, at the die supporting shaft (214), fourth channels (215) that protrude externally and frontally with respect to said die supporting shaft (214) and within which a fluid (207) is introduced, a needle or cannula (206) being present within each one of said fourth channels (215) and protruding from each one of said fourth channels (215) until it affects the hole (205) for feeding said polymer, each one of said needle or cannula (206) being then curved so as to affect said duct for the extrusion of said polymer defined between said male die (204) and said female die (203) until it exits from said duct by a chosen length.

7. The method according to one or more of the preceding claims, wherein the needles or cannulas (6) are arranged at said polymer extrusion duct, and protrude therefrom and from the female die (3) by a chosen length.

8. The method according to one or more of the preceding claims, wherein said fluid (7) can be constituted by a gas or by a liquid.

9. The method according to one or more of the preceding claims, from 1 to 7, wherein said fluid (7) can be constituted by a stream of air or carbon dioxide or by water.

10. The method according to one or more of the preceding claims, wherein in a region that is located beyond the end of the holes (5, 105, 205) connected to the polymer extrusion duct, the fluid (7) is made to flow inside each needle or cannula 6.

11. The method according to one or more of the preceding claims, wherein said needles or cannulas 6 have a diameter substantially of a few tenths of a millimeter.

12. The method according to one or more of the preceding claims, wherein, when the film of thermoplastic material exits from the head (2), the extrusion process ends with the vaporization of the gas contained inside the thermoplastic material and the film thus has dimensional stability.

13. The method according to one or more of the preceding claims, wherein the polymer already stabilized is separated from the fluid (7) so as to define an axial cavity or seat (9) that is dimensionally stable.

14. The method according to one or more of the preceding claims, wherein the shape of the needles or cannulas (6) can be circular or square or rectangular or elliptical.

## Patentansprüche

1. Verfahren zum Extrudieren einer Folie (1) aus einem expandierten Polymer wie etwa einem aus Polyethylen oder Polypropylen bestehenden expandierten Polyolefin mittels eines Extrusionskopfes (2), der aus einer Matrize (3, 103, 203) und einer Patrize (4, 104, 204) besteht, die einen Durchgang für die Extrusion des Polymers definieren, wobei
die Patrizen oder Matrizen (3, 103, 203, 4, 104, 204) eine Vielzahl von Löchern (5, 105, 205) aufweisen, die eine Vielzahl von Nadeln oder Kanülen (6, 106, 206) aufnehmen, die axial perforiert sind und im Durchgang für die Extrusion des Polymers angeordnet werden können und daraus austreten,
wobei das Verfahren **dadurch gekennzeichnet ist, dass**:
die Vielzahl von Nadeln oder Kanülen (6, 106, 206) aus dem Ende der Löcher (5, 105, 205) und des Extrusionskopfs (2) hervortritt;
ein Extrusionsschritt durchgeführt wird, wobei der Extrusionskopf (2) ein Polymer extrudiert, um ein Rohr (8) zu schaffen;
während der Extrusion die Vielzahl von Nadeln oder Kanülen (6, 106, 206) von einem Fluid (7, 107, 207) erreicht wird, das während der Extrusion des Polymers expandiert, um das Polymer beim Ausgang aus dem Kopf (2) zu trennen, um so die axialen Hohlräume oder Sitze (9) im extrudierten Rohr (8) zu definieren;
das extrudierte Rohr (8) longitudinal geschnitten wird, um die mit den individuellen axialen Hohlräumen oder Sitzen (9) versehene Folie (1) zu definieren.

2. Verfahren nach Anspruch 1, **dadurch gekennzeichnet, dass** eine Vielzahl von Löchern (5) an der Matrize (3) vorgesehen ist und eine Vielzahl von Nadeln oder Kanülen (6) aufnimmt, die axial perforiert sind und einen Durchmesser im Wesentlichen von einigen Zehntel eines Millimeters aufweisen, wobei die Löcher (5) mit dem Durchgang für die Extrusion des Polymers verbunden sind, wobei die Nadeln oder Kanülen (6) über eine gewählte Länge aus dem Durchgang für die Extrusion des Polymers und aus der Matrize (3) austreten.

3. Verfahren nach Anspruch 1, **dadurch gekennzeichnet, dass** es ermöglicht, ein Rohr (8) zu erhalten, das in seiner Dicke eine Vielzahl axialer Hohlräume oder Sitze (9) aufweist, die als Funktion der Anzahl und Platzierung der Nadeln oder Kanülen (6) wechselseitig beabstandet sind, wobei das Rohr (8) anschließend longitudinal geschnitten wird, um so die Folie (1) zu definieren, die mit individuellen axialen Hohlräumen oder Sitzen (9) versehen ist, die eine polygonale Form haben.

4. Verfahren nach einem oder mehreren der vorhergehenden Ansprüche, **dadurch gekennzeichnet, dass** die Matrize (3) eine Kammer (10) aufweist, in der ein Fluid durch einen oder mehr erste Kanäle (11) eingeführt wird, wobei die Kammer (10) mit den Löchern (5) verbunden ist.

5. Verfahren nach einem der mehreren der vorhergehenden Ansprüche, **dadurch gekennzeichnet, dass** eine Vielzahl zweiter Kanäle (112) in der Patrize (104) vorgesehen ist und mit einem oder mehr dritten Kanälen (113) verbunden ist, die aus der Patrize (104) hervortreten und worin ein Fluid (107) eingeführt wird, wobei eine Nadel oder Kanüle (106) innerhalb jedes einzelnen der zweiten Kanäle (112) vorhanden ist und aus jedem einzelnen der zweiten Kanäle (112) hervortritt, bis sie ein Loch (105) zum Einspeisen des Polymers erreicht, wobei jede einzelne der Nadeln oder Kanülen (106) dann so gekrümmt ist, dass sie den Durchgang für die Extrusion des Polymers, der zwischen der Patrize (104) und der Matrize (103) definiert ist, erreicht, bis sie um eine gewählte Länge aus der Letztgenannten hervortritt.

6. Verfahren nach einem oder mehreren der vorhergehenden Ansprüche, **dadurch gekennzeichnet, dass** es in der Patrize (204) an dem die Gussform tragenden Schaft (214) vierte Kanäle (215) gibt, die in Bezug auf den die Gussform tragenden Schaft (214) extern und frontal hervortreten und in denen ein Fluid (207) eingeführt wird, wobei eine Nadel oder Kanüle (206) in jedem einzelnen der vierten Kanäle (215) vorhanden ist und aus jedem einzelnen der vierten Kanäle (215) hervortritt, bis sie das Loch (205) zum Einspeisen des Polymers erreicht, wobei jede einzelne der Nadeln oder Kanülen (206) so gekrümmt ist, dass sie den Durchgang für die Extrusion des Polymers, der zwischen der Patrize (204) und der Matrize (203) definiert ist, erreicht, bis sie um eine gewählte Länge aus dem Durchgang hervortritt.

7. Verfahren nach einem oder mehreren der vorhergehenden Ansprüche, wobei die Nadeln oder Kanülen (6) beim Durchgang für eine Polymerextrusion angeordnet sind und um eine gewählte Länge von dort und aus der Matrize (3) hervortreten.

8. Verfahren nach einem oder mehreren der vorhergehenden Ansprüche, wobei das Fluid (7) von einem Gas oder einer Flüssigkeit gebildet wird.

9. Verfahren nach einem oder mehreren der vorhergehenden Ansprüche 1 bis 7, wobei das Fluid (7) von einem Luft- oder Kohlendioxidstrom oder von Wasser gebildet werden kann.

10. Verfahren nach einem oder mehreren der vorhergehenden Ansprüche, wobei in einem Bereich, der jenseits des Endes der Löcher (5, 105, 205) liegt, die mit dem Durchgang für eine Polymerextrusion verbunden sind, man das Fluid (7) innerhalb jeder Nadel oder Kanüle (6) strömen lässt.

11. Verfahren nach einem oder mehreren der vorhergehenden Ansprüche, wobei die Nadeln oder Kanülen (6) einen Durchmesser im Wesentlichen von einigen Zehntel eines Millimeters aufweisen.

12. Verfahren nach einem oder mehreren der vorhergehenden Ansprüche, wobei, wenn der Film aus einem thermoplastischen Material aus dem Kopf (2) austritt, der Extrusionsprozess mit der Verdampfung des innerhalb des thermoplastischen Materials enthaltenen Gases endet und der Film somit Formstabilität aufweist.

13. Verfahren nach einem oder mehreren der vorhergehenden Ansprüche, wobei das schon stabilisierte Polymer vom Fluid (7) getrennt wird, um einen axialen Hohlraum oder Sitz (9) zu definieren, der formstabil ist.

14. Verfahren nach einem oder mehreren der vorhergehenden Ansprüche, wobei die Form der Nadeln oder Kanülen (6) kreisförmig oder quadratisch oder rechteckig oder elliptisch sein kann.

## Revendications

1. Une méthode pour extruder une feuille (1) de polymère expansé, telle qu'une polyoléfine expansée réalisée à partir de polyéthylène ou de polypropylène, au moyen d'une tête d'extrusion (2) composée d'une matrice femelle (3, 103, 203) et d'une matrice mâle (4, 104, 204) qui définissent un conduit pour l'extrusion dudit polymère, dans lequel :
lesdites matrices mâles ou femelles (3, 103, 203, 4, 104, 204) ont une pluralité de trous (5, 105, 205) qui loge une pluralité d'aiguilles ou de canules (6, 106, 206) qui sont axialement perforées et peuvent être agencées au niveau dudit conduit pour l'extrusion dudit polymère et sa sortie,
la méthode étant **caractérisé en ce que** :
ladite pluralité d'aiguilles ou de canules (6, 106, 206) fait saillie à l'extérieur de l'extrémité desdits trous (5, 105, 205) et de ladite tête d'extrusion (2) ;
réaliser une étape d'extrusion, dans laquelle ladite tête d'extrusion (2) extrude un polymère afin de fournir un tube (8) ;
pendant ladite extrusion, affecter ladite pluralité d'aiguilles ou de canules (6, 106, 206) par un fluide (7, 107, 207) qui subit une expansion pendant l'extrusion dudit polymère, afin de séparer ledit polymère au sortir de ladite tête (2) afin de définir desdites cavités axiales ou sièges axiaux (9) dans ledit tube (8) extrudé ;
couper longitudinalement ledit tube (8) extrudé afin de définir ladite feuille (1) prévue avec lesdites cavités axiales distinctes ou sièges axiaux distincts (9).

2. La méthode selon la revendication 1, **caractérisée en ce qu'**une pluralité de trous (5) sont prévus au niveau de ladite matrice femelle (3) et logent une pluralité d'aiguilles ou de canules (6) qui sont axialement perforées et ont un diamètre sensiblement de quelques dixièmes de millimètre, lesdits trous (5) étant raccordés audit conduit pour l'extrusion dudit polymère, lesdites aiguilles ou canules (6) sortant dudit conduit pour l'extrusion dudit polymère et de ladite matrice femelle (3) sur une longueur choisie.

3. La méthode selon selon la revendication 1, **caractérisée en ce qu'**elle permet d'obtenir un tube (8) qui a, au niveau de son épaisseur, une pluralité de cavités axiales ou sièges axiaux (9) qui sont mutuellement espacés(ées) en fonction du nombre et de l'emplacement desdites aiguilles ou canules (6), ledit tube (8) étant ensuite longitudinalement coupé afin de définir ladite feuille (1) prévue avec des cavités axiales distinctes ou sièges axiaux distincts (9) qui ont une forme polygonale.

4. La méthode selon une ou plusieurs des revendications précédentes, **caractérisée en ce que** ladite matrice femelle (3) a une chambre (10) dans laquelle un fluide est introduit par un ou plusieurs premiers canaux (11), ladite chambre (10) étant raccordée auxdits trous (5).

5. La méthode selon une ou plusieurs des revendications précédentes, **caractérisée en ce qu'**une pluralité de deuxièmes canaux (112) sont prévus sur ladite matrice mâle (104) et sont raccordés aux un ou plusieurs troisièmes canaux (113) qui font saillie à l'extérieur de ladite matrice mâle (104) et dans lesquels un fluide (107) est introduit, une aiguille ou canule (106) étant présente à l'intérieur de chacun desdits deuxièmes canaux (112) et faisant saillie de chacun desdits deuxièmes canaux (112) jusqu'à ce qu'elle affecte un trou (105) pour alimenter ledit polymère, chacune desdites aiguilles ou canules (106) étant ensuite incurvée afin d'affecter ledit conduit pour l'extrusion dudit polymère défini entre ladite matrice mâle (104) et ladite matrice femelle (103) jusqu'à ce qu'elle sorte de cette dernière sur une longueur choisie.

6. La méthode selon une ou plusieurs des revendications précédentes, **caractérisée en ce que** dans ladite matrice mâle (204), il y a, au niveau de l'arbre de support de matrice (214), des quatrièmes canaux (215) qui font saillie à l'extérieur et frontalement par rapport audit arbre de support de matrice (214) et à l'intérieur de laquelle, un fluide (207) est introduit, une aiguille ou canule (206) étant présente à l'intérieur de chacun desdits quatrièmes canaux (215) et faisant saillie de chacun desdits quatrièmes canaux (215) jusqu'à ce qu'elle affecte le trou (205) pour alimenter ledit polymère, chacune parmi ladite aiguille ou canule (206) étant ensuite incurvée afin d'affecter ledit conduit pour l'extrusion dudit polymère défini entre ladite matrice mâle (204) et ladite matrice femelle (203) jusqu'à ce qu'elle sorte dudit conduit sur une longueur choisie.

7. La méthode selon une ou plusieurs des revendications précédentes, dans laquelle les aiguilles ou canules (6) sont agencées au niveau du conduit d'extrusion de polymère, et font saillie de ce dernier et de la matrice femelle (3) sur une longueur choisie.

8. La méthode selon une ou plusieurs des revendications précédentes, dans laquelle ledit fluide (7) peut être constitué par un gaz ou par un liquide.

9. La méthode selon une ou plusieurs des revendications précédentes, de 1 à 7, dans laquelle ledit fluide (7) peut être constitué par un flux d'air ou de dioxyde de carbone ou par de l'eau.

10. La méthode selon une ou plusieurs des revendications précédentes, dans laquelle dans une région qui est positionnée au-delà de l'extrémité des trous (5, 105, 205) raccordés au conduit d'extrusion de polymère, le fluide (7) est fait pour s'écouler à l'intérieur de chaque aiguille ou canule (6).

11. La méthode selon une ou plusieurs des revendications précédentes, dans laquelle lesdites aiguilles ou canules (6) ont un diamètre sensiblement de quelques dixièmes de millimètre.

12. La méthode selon une ou plusieurs des revendications précédentes, dans laquelle, lorsque le film de matériau thermoplastique sort de la tête (2), le processus d'extrusion se termine par la vaporisation du gaz contenu à l'intérieur du matériau thermoplastique et le film présente ainsi une stabilité dimensionnelle.

13. La méthode selon une ou plusieurs des revendications précédentes, dans laquelle le polymère déjà stabilisé est séparé du fluide (7) afin de définir une cavité axiale ou siège axial (9) qui est dimensionnellement stable.

14. La méthode selon une ou plusieurs des revendications précédentes, dans laquelle la forme des aiguilles ou des canules (6) peut être circulaire ou carrée ou rectangulaire ou elliptique.
